# EUROPÄISCHE PATENTSCHRIFT

(11) **EP 0 422 324 B1**
(45) Veröffentlichungstag und Bekanntmachung des Hinweises auf die Patenterteilung: **22.06.1994**
(21) Anmeldenummer: 90105431.2
(22) Anmeldetag: 22.03.1990
(51) Int. Cl.: B62K 25/00, B62M 9/16

(54) **Hinterradaufhängung für ein Einspurfahrzeug insbesondere ein Motorrad**
Rear wheel suspension for one track vehicle especially for a motorcycle
Suspension arrière pour un véhicule à voie unique, en particulier une motocyclette

(30) Priorität: 12.10.1989 DE 3934120
(43) Veröffentlichungstag der Anmeldung: 17.04.1991
(73) Patentinhaber: Helms, Hans Günter, D-26125 Oldenburg (DE); Vosteen, Klaus, D-26125 Oldenburg (DE)
(72) Erfinder: Helms, Hans Günter, D-26125 Oldenburg (DE); Vosteen, Klaus, D-26125 Oldenburg (DE)

(56) Entgegenhaltungen:
- EP-A- 0 279 763
- EP-A- 0 288 370
- US-A- 4 058 181
- US-A- 4 061 050

## Beschreibung

Die Erfindung betrifft eine Hinterradaufhängung für ein Einspurfahrzeug, insbesondere ein Motorrad, bei dem das per Kette oder Zahnriemen angetriebene Rad an einem Hebel einseitig gelagert ist, weicher an einer einarmigen Hinterradschwinge gelagert ist, und an dem eine Strebe angelenkt ist, die an der Schwinge befestigt ist, oder die über ein Hebelsystem mit dem Fahrzeugrahmen gelenkig verbunden ist. Einseitige Hinterradaufhängungen sind beispielsweise durch DE 891 055 bekannt. Sie sollen bei Motorrädern den Hinterradausbau erleichtern, sowie Platz schaffen für die Montage einer genügend Bodenfreiheit in Schräglage gewährleistenden Auspuffanlage. Der Hinterradausbau bei einer konventionellen Zweiarmhinterradschwinge eines Motorrades mit Ketten- oder Zahnriemenantrieb bedingt das Abnehmen der Kette (des Zahnriemens) vom hinteren Kettenrad (Zahnriemenrad), sowie bei Hinterrädern mit Scheibenbremse die Demontage des Bremssattels, da sowohl das Kettenrad (Zahnriemenrad), als auch die Bremsscheibe am Hinterrad befestigt sind. Bei einer einseitigen Ausführung verbleiben vorgenannte Teile an der Aufhängung, so daß nur das Hinterrad samt Reifen (wie bei Automobilen üblich) demontiert wird. Bei bekannten einseitigen Hinterradaufhängungen für ketten- oder zahnriemengetriebene Hinterräder,wie beispielsweise in EP-A-0 288 370 beschrieben, ist die Antriebswelle vom Kettenrad zum Hinterrad in einem Exzenter gelagert, der sich zum Nachstellen der Kettenspannung (Zahnriemenspannung) verstellen läßt. Um die Antriebswellenlagerung aufzunehmen und gleichzeitig einen ausreichenden Verstellweg zu gewährleisten, benötigt der Exzenter einen relativ großen Durchmesser, der wiederum ein relativ hohes Eigengewicht der Vorrichtung zur Folge hat. Zudem bedingt die Kettenspannung (Zahnriemenspannung ) per Exzenter eine Änderung des Anstellwinkels der Schwinge zur Motorradlängsachse, um eine Höhenänderung des Fahrzeughecks infolge Kettenspannungsänderung (Zahnriemenspannungsänderung) gegenüber der Fahrbahn zu vermeiden. Desweiteren benötigt eine Hinterradschwinge be schriebener Bauart eine aufwendige Vorrichtung zur Befestigung des Bremssattels einer Scheibenbremse.

Die Lagerung des Bremssattels muß koaxial zur Antriebswelle erfolgen um bei einer Verstellung des Exzenters die gleiche Position zu der an der Antriebswelle befestigten Bremsscheibe beizubehalten. Soll das Bremsmoment nicht in die Schwinge eingeleitet werden, ist ein separates Hebelsystem, welches am Bremssattel und am Fahrzeugrahmen zu befestigen ist, erforderlich. Ein weiterer Nachteil bekannter Einarm- und auch Zweiarmschwingen ist die Kettenspannungsänderung (Zahnriemenspannungsänderung) infolge Einfederung. Da bei fast allen heutigen Ausführungen einer Hinterradschwinge der vordere Drehpunkt der Schwinge und die Achse des Vorderen Kettenrades (Zahnriemenrades) nicht koamial zueinander sind, ergibt sich eine Kettenspannungsänderung (Zahnriemenspannungsänderung) infolge Einfederung, dergestalt, daß sich die Kette (der Zahnriemen) bei jeglicher Auslenkung von einer Lage entspannt, in der sich die Drehpunkte des vorderen Kettenrades (Zahnriemenrades), der Schwingenlagerung und des Hinterrades auf einer Linie befinden. Die Höhe der Spannungsänderung ist dabei abhängig vom Abstand der Schwingenlagerung zur Achse des vorderen Kettenrades (Zahnriemenrades), sowie von der Auslenkung der Hinterradschwinge von besagter Strecklage. Eine bereits ausgeführte Lösung dieses Problems stellt sich in der koaxialen Lagerung der Hinterradschwinge zum vorderen Kettenrad (Zahnriemenrad) dar. Bei einer solchen Lösung ist jedoch, bei vorgegebener Einbaulage des Motors eine längere Schwinge notwendig als bei einer konventionellen Lösung, woraus sich eine relative Erhöhung der ungefederten Massen, oder einel Reduzierung der Steifigkeit der Schwinge ergibt. Desweiteren kann die Lagerung der Schwinge nicht mit einer durchgehenden Achse erfolgen.

Einer kompakten Bauweise der Schwinge steht zudem noch die Lagerung der Schwinge seitlich neben dem vorderen Kettenrad (Zahnriemenrad) bedingte große Breite einer solchen Lösung gegenüber. Die beschriebene Änderung der Kettenspannung (Zahnriemenspannung) infolge Einfederung hat zudem noch Reaktionen der Hinterradfederung zur Folge. Diese resultieren aus der Kettenzugkraft und entstehen wie folgt: Dadurch daß bei Anstellwinkeländerung der Schwinge gegenüber der Strecklage die Kettenspannung (Zahnriemenspannung) sich ändert, tritt ein Moment um den Schwingendrehpunkt auf, welches sich bei zunehmender Ein- oder Ausfederung selbst verstärkt. Die Strecklage stellt sich somit als labiles Gleichgewicht dar.

Der Erfindung liegt die Aufgabe zugrunde, eine einarmige Hinterradaufhängung so weiterzubilden, daß sie bei minimalstem Bau- und Konstruktionsaufwand möglichst viele Vorteile in sich vereint. Dazu ist das Hinterrad nicht direkt am hinteren Schwingenende befestigt, sondern an einer um besagtes Schwingenende drehbaren Vorrichtung, im weiteren Stellhebel genannt.Solche Stellhebel sind beispielsweise durch AT 155 097, EP-A-0 279 763, US-A-4 061 050 und US-A-4 058 181 bekannt.

Bei der ersten Ausführung der erfindungsgemäßen Hinterradaufhängung ist die Radachse am oberen Ende des Stellhebels gelagert. Am unteren Ende des Stellhebels ist eine längenverstellbare Strebe gelagert, im weiteren Streckstrebe genannt. Diese ist an ihrem anderen Ende an der Schwinge befestigt. Ihre Längenänderung dient der Kettenspannungsänderung (Zahnriemenspannungsänderung), die im Gegensatz zu einer Exzenterverstellung annähernd parallel zur Schwingenlängsachse erfolgen kann.Bei den vorgenannten Dokumenten AT 097, EP 763 sowie US 050 und 181 dient der Stellhebel der einfederungsabhängigen Beeinflussung der Hinterradeinfederungskurve mittels zweier daran befestigter Längslenker,während bei einer Weiterbildung der hier beschriebenen erfindungsgemäßen Hinterradaufhängung der besagte Stellhebel mittels eines Hebelsystems mit dem Fahrzeugrahmen verbunden ist. Das Hebelsystem ist kinematisch so ausgelegt, daß bei einer nicht koaxialen Lagerung der Schwinge, die Einfederungskurve des Hinterrades dahingehend beeinflußt werden kann, daß diese der einer koaxialen Schwingenlagerung annähernd entspricht (Pseudo-Koaxialität). Es gibt mehrere konstruktiv mögliche Auslegungen eines solchen Hebelsystems. Allen erfindungsgemäßen Lösungen gemein ist die Integration einer Verstellmöglichkeit der Kettenspannung (Zahnriemenspannung), die annähernd parallel zur Schwingenlängsachse wirkt, sowie die Aufnahme des Bremsmomentes über besagtes Hebelsystem. Die Hebelei vereint also in jedem Falle mehrere Funktionen in sich, wodurch sich der Bauaufwand verringert. Dies ist bei Motorrädern, die für den Rennsport benutzt werden, aufgrund der erzielten Gewichtsersparnis von wesentlichem Vorteil.

Zudem besitzt jede der im folgenden beschriebenen Hebelanordnungen die Möglichkeit der Einstellbarkeit, wodurch sich die Einfederungskurve, sowie die durch Antrieb und Bremsung hervorgerufenen Reaktionsmomente auf die Hinterradfederung separat beeinflussen lassen.

Bei der ersten möglichen Anordnung ist der am hinteren Schwingenende drehbar gelagerte Stellhebel an seinem oberen Ende mit der Hinterachslagerung verbunden, an seinem unteren Ende mit einem Hebelsystem folgender Ausführung:
Die zum Zweck der Kettenspannungsänderung (Zahnriemenspannungsänderung) längenverstellbare Streckstrebe ist an ihrem hinteren Ende mit besagtem Stellhebel verbunden. Ihr vorderes Ende ist an einem Kipphebel befestigt, der wiederum an der Schwinge drehbar gelagert ist. An dem anderen Ende des Kipphebels befindet sich eine ebenfalls längenverstellbare Strebe, im weiteren Stellstrebe genannt, die ihrerseits am Fahrzeugrahmen gelenkig gelagert ist. Bei einer Lagerung der Schwingenachse hinter der vorderen Kettenradachse stellt sich die Strecklage, in der sich die Hinterradachse, die Schwingenachse und die vordere Kettenradachse auf einer Linie befinden, die Position mit dem größten Abstand der beiden Kettenräder (Zahnriemenräder) zueinander dar. Um besagte Pseudo-Koaxialität zu erreichen, befinden sich in dieser Schwingenstellung die auch dem Zweck der Kettenspannungsänderung dienende Streckstrebe, sowie der mit ihr verbundene Arm des Kipphebels in Strecklage, d.h., die Lagerachse des Kipphebels, sowie die beiden Anlenkpunkte der Streckstrebe befinden sich auf einer Linie. Bei Ein- oder Ausfederung des Hinterrades wird über die Stellstrebe eine Drehbewegung des Kipphebels bewirkt, die wiederum eine Auslenkung der Streckstrebe zur Folge hat. Daraus ergibt sich eine Verkürzung des Abstandes der Kipphebelachse zum unteren Anlenkpunkt des Stellhebels, woraus eine Vergrößerung des Abstandes vom vorderen Schwingendrehpunkt zur Radachse resultiert. Bei einer entsprechenden Auslegung des Hebelsystems läßt sich eine Radeinfederungskurve erreichen, die der einer koaxial zum vorderen Kettenrad gelagerten Schwinge annähernd entspricht. Zudem bewirkt ein solches Hebelsystem andere Reaktionsmomente der Hinterradfederung infolge Antrieb und Bremsung als eine konventionelle Ausführung. Sowohl die Einleitung einer Bremskraft über den Bremssattel, als auch die Einleitung einer Kettenzugkraft infolge Fahrzeugbeschleunigung bewirken ein Rückstellmoment in besagter Hebelei, dergestalt, daß beide Einflüsse ein in die Strecklage gerichtetes Rückstellmoment auf den Streckhebel mit dem damit verbundenen Kipphebelarm bewirken. Bei einer pseudo-koaxialen Auslegung des Hebelsystems läßt sich damit ein teilweiser Anfahr- und Bremsnickausgleich erreichen. Über eine Änderung von Anlenkung und Länge der Stellstrebe sind auch andere Einfederungskurven des Hinterrades möglich, um beispielsweise einen vollständigen Anfahrausgleich zu ermöglichen, daß heißt der durch die dynamische Achslastverteilung infolge der Beschleunigung und Bremsung des Motorrades auftretenden Einfederungsänderung tritt eine entgegengesetzte Federreaktion entgegen, die stattfindet, wenn der Stellhebel über das der koaxialen Ausführung entsprechende Maß hinaus die Radachse nach hinten bewegt. Darüber hinaus ist bei einer entsprechenden Auslegung des Kipphebels der vordere Anlenkpunkt der Stellstrebe am Fahrzeugrahmen frei wählbar, und kann somit den jeweiligen Einbaubedingungen des mit diesem Systems ausgerüsteten Fahrzeugs angepaßt werden. Bei AT 155 097 und EP 763, sowie US 050 und 181 wird die Pseudo-Koaxialität nicht über einen zwischengeschalteten Kipphebel erreicht, somit sind dort keine separaten Einstellmöglichkeiten der Hinterradeinfederungskurve und der Kettenspannung möglich, und eine in den Stellhebel eingeleitete Bremskraft bewirkt in jedem Fall eine Einfederreaktion der Aufhängung. Zudem lassen die dort vorgestellten Hinterradaufhängungssysteme dem Konstrukteur weniger Freiheiten bei der Wahl der Anlenkpunkte am Fahrzeugrahmen.

Bei einer zweiten Ausführung des Hebelsystems handelt es sich um die gleiche Anordnung der besagten Hebelei wie bei der ersten Variante, wobei die Hebelei allerdings oberhalb des Schwingenholms angebracht ist. Während bei der ersten Anordnung die Streckstrebe infolge des Antriebs- und des Bremsmomentes jeweils auf Zug beansprucht wird, bewirkt bei dieser Ausführung das Bremsmoment eine Druckkraft in der Streckstrebe, aus der wiederum eine Aus- oder Einfederreaktion der Schwinge resultiert, abhängig von der Stellung der Streckstrebe zum Kipphebel, dergestalt, daß eine Bremsung im Federzustand unterhalb der Strecklage ein ausfederndes Moment und eine Bremsung im Federzustand oberhalb der Strecklage ein einfederndes Moment erzeugt. Auch bei dieser Anordnung ist der vordere Anlenkpunkt der Stellstrebe am Fahrzeugrahmen frei bestimmbar. Bei einem dritten Hebelsystem wird die Stellstrebe an ihrem hinteren Ende direkt mit dem unteren Anlenkpunkt des Stellhebels der progressiven Betätigung eines Zentralfederbeins dienenden Hebelei angelenkt. Da dieses Hebelsystem wiederum über eine an der Schwinge angelenkte Zugstrebe betätigt wird, ergeben sich bei geeigneter Anlenkung der Stellstrebe ebenfalls eine Pseudo-Koaxialität der Hinterradeinfederungskurve, sowie verschiedene Beeinflussungsmöglichkeiten der Hinterradfederungsreaktionen infolge Antriebs- und Bremsmoment. Eine weitere Ausführung ist bei einer oberhalb der Schwinge angebrachten Federbetätigungshebelei möglich mit Hilfe einer oberhalb der Radachse angelenkten Stellstrebe. Hierbei ergeben sich ähnliche kinematische Möglichkeiten wie bei der vorhergehend erläuterten Version.

Ausführungsbeispiele, aus denen sich weitere erfinderische Merkmale ergeben, sind in der Zeichnung dargestellt. Es zeigen:
**Fig. 1** eine schematische Ansicht des Hinterradbereiches eines per Kette oder Zahnriemen angetriebenen Motorrades mit erfindungsgemäßer Hinterradaufhängung mit Vorrichtung zur Spannung der Antriebskette (des Antriebszahnriemens).
**Fig. 2** eine schematische Untersicht der Ausführung gemäß Fig. 1
**Fig. 3** eine schematische Ansicht des Hinterradbereiches eines Motorrades mit konventioneller Hinterradschwinge und Kettenantrieb (Zahnriemenantrieb).
**Fig. 4** eine schematische Ansicht der ersten Ausführung der erfindungsgemäßen Hinterradaufhängung mit erfindungsgemäßer Kettenspannvorrichtung (Zahnriemenspannvorrichtung), sowie erstem Hebelsystem zur Beeinflussung der Einfederungskurve des Hinterrades.
**Fig. 5** eine Untersicht der Ausführung gemäß Fig. 4.
**Fig. 6** eine schematische Darstellung des Bewegungsablaufs der erfindungsgemäßen Verstellhebelei infolge Einfederung des Hinterrades.
**Fig. 7** eine schematische Seitenansicht der zweiten Ausführung eines Hebelsystems.
**Fig. 8** eine schematische Seitenansicht der dritten Ausführung eines Hebelsystems.
**Fig. 9** eine schematische Seitenansicht der vierten Ausführung eines Hebelsystems.

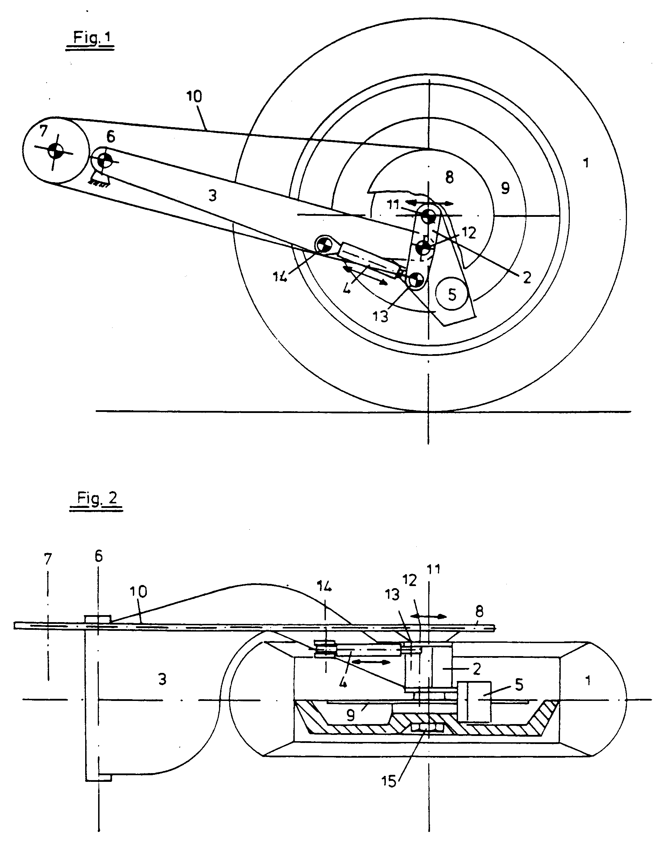

**Fig. 1** zeigt schematisch in einer Seitenansicht den Hinterradbereich eines Motorrades. Das Hinterrad **1** ist in einem Stellhebel **2** im Drehpunkt **11** gelagert. Der Stellhebel ist beweglich am hinteren Ende der Hinterradschwinge **3** im Drehpunkt **12** gelagert. Die Hinterradschwinge ist an ihrem vorderen Ende am Fahrzeugrahmen im Punkt **6** gelagert. An dem Lagerpunkt **13** des Stellhebels befindet sich eine längenverstellbare Strebe **4**, welche beidseitig gelenkig gelagert ist, und an ihrem vorderen Lagerpunkt **14** mit der Hinterradschwinge verbunden ist. Am Stellhebel **2** ist ebenfalls der Bremssattel **5** befestigt, der auf die Bremsscheibe **9** wirkt. Eine Längenverstellung der Strebe **4** bewirkt eine Schwenkung des Stellhebels **2** um seinen Lagerpunkt an der Hinterradschwinge **12**, woraus eine Änderung der Spannung der Antriebskette (des Antriebszahnriemens) **10** resultiert. Die Federung und Dämpfung einer solchen Aufhängung kann wie bei bekannten Hinterradaufhängungen erfolgen und ist deshalb hier nicht dargestellt.

**Fig. 2** zeigt schematisch in einer Untersicht die erfindungsgemäße Hinterradaufhängung nach Fig. 1. Der Stellhebel **2** befindet sich zwischen der Aufnahme des Hinterrades **1** mit der daran befindlichen Bremsscheibe **9** und dem hinteren Kettenrad (Zahnriemenrad) **8**, welches über eine im Punkt **11** gelagerte Antriebswelle mit dem Hinterrad **1** verdrehfest verbunden ist. Das Hinterrad kann mittels einer Zentralmutter **15**, oder aber über eine hier nicht dargestellte automobilübliche Befestigung mittels mehrerer Schrauben von der Antriebswelle demontiert werden, wobei sämtliche anderen Bauteile an der Aufhängung verbleiben.

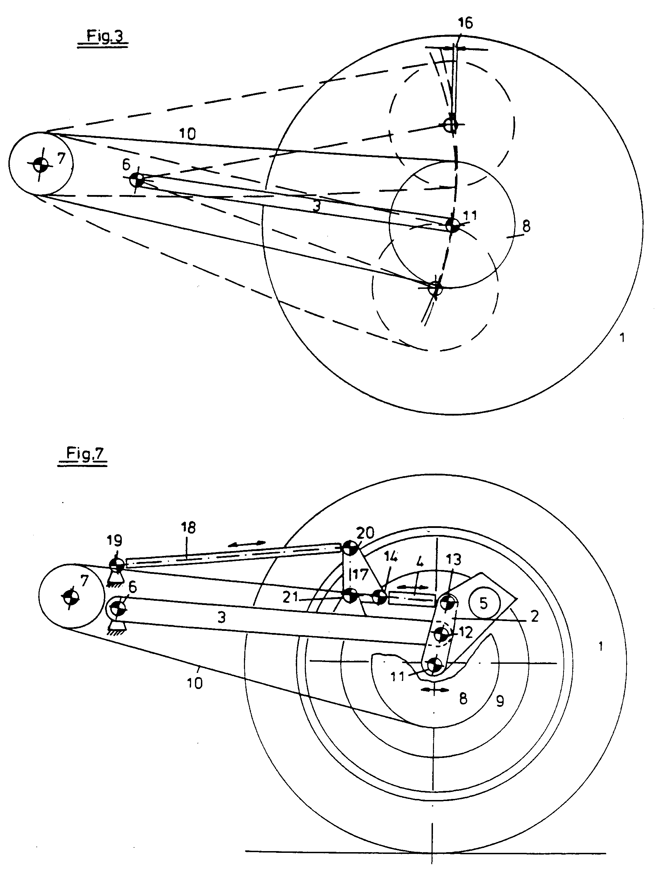

**Fig. 3** zeigt eine schematische Seitenansicht der Einfederungskinematik einer konventionellen Aufhängung eines per Kette oder Zahnriemen angetriebenen Hinterrades, bei dem die Lagerung des vorderen Kettenrades (Zahnriemenrades) 7 und die vordere Lagerung der Hinterradschwinge **6** nicht koaxial zueinander sind. Bei einer durch Ein- oder Ausfederung hervorgerufenen Auslenkung der Hinterradschwinge **3** von einer Lage, in der sich die Punkte **6**,**7** und **11** auf einer Linie befinden, ergibt sich eine Änderung des Achsabstandes **16** der beiden Kettenräder (Zahnriemenräder) **7** und **8** (voneinander), woraus eine Reduzierung der Kettenspannung (Zahnriemenspannung) resultiert.

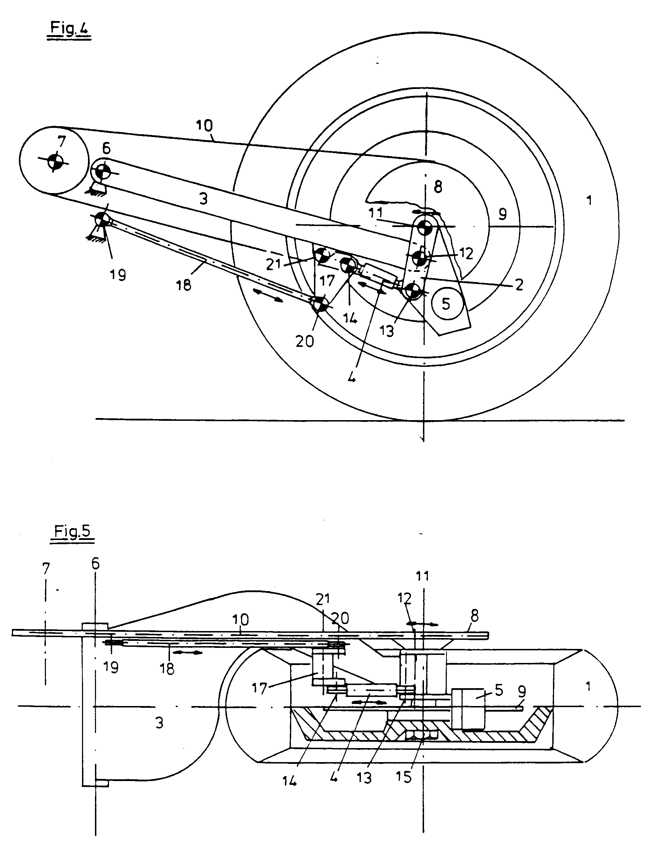

**Fig. 4** zeigt eine schematische Seitenansicht der erfindungsgemäßen Hinterradaufhängung mit erfindungsgemäßer Kettenspannvorrichtung (Zahnriemenspannvorrichtung), sowie erstem Hebelsystem zur Beeinflussung der Hinterradeinfederungskurve. Analog zu der unter Fig. 1 dargestellten Ausführung ist das Hinterrad in dem oberen Lagerpunkt **11** des Verstellhebels **2** gelagert. Dieser wiederum ist an Punkt **12** gelenkig mit der Hinterradschwinge verbunden. An seinem unteren Lagerpunkt **13** ist eine längenverstellbare Strebe **4** angelenkt. Diese ist an ihrem vorderen Lagerpunkt **14** mit einem Kipphebel **17** verbunden, welcher seinerseits an dem an der Hinterradschwinge **3** befindlichen Punkt **21** drehbar gelagert ist. Am Lagerpunkt **20** des Kipphebels **17** ist eine weitere längenverstellbare Strebe **18** gelagert, deren vorderer Anlenkpunkt **19** sich am Fahrzeugrahmen befindet. Der auf die Bremsscheibe **9** wirkende Bremssattel **5** ist mit dem Stellhebel **2** starr verbunden. In der dargestellten Position befindet sich die Schwinge in Strecklage, d.h. die Achsmitte des vorderen Kettenrades (Zahnriemenrades) **7** , der sich am Fahrzeugrahmen oder direkt am Motorgehäuse befindliche vordere Drehpunkt der Hinterradschwinge **6** und die Hinterradachse **11** befinden sich auf einer Linie. Die Anordnung der Strebe **4** mit dem Kipphebel **17** ist so gewählt, daß sich die Lagerpunkte **13**,**14** und **21** in dieser Position ebenfalls auf einer Linie befinden. Bei einer Einfederung bewegt sich der hintere Anlenkpunkt **12** der Hinterradschwinge **3** auf einem Kreisbogen, dessen Radius die Länge der Hinterradschwinge **3** darstellt, um deren vorderen Lagerpunkt **6**. Die mittels des Kipphebels **17** mit der Hinterradschwinge gekoppelte, längenverstellbare Strebe **18** bewirkt abhängig davon ebenfalls eine Bewegung des Lagerpunktes 20 auf einer Kreisbahn mit dem durch die Länge der Strebe 18 dargestellten Radius um den Punkt 19.

Fig.5 zeigt eine schematische Untersicht der unter Fig.4 dargestellten Ausführung der erfindungsgemäßen Hinterradaufhängung. Die Anordnung des Hinterrades1, des Stellhebels2, des Bremssattels 5, der Bremsscheibe 9, sowie des hinteren Kettenrades 8 entspricht der in Fig.2 dargestellten Variante. Abweichend davon ist die Strebe 4 mit ihrem Lagerpunkt 14 mit dem Kipphebel 17 verbunden, dessen Lagerachse 21 sich an der Hinterradschwinge 3 befindet. An besagtem Kipphebel 17 ist die zweite längenverstellbare Strebe 18 am Punkt 20 gelagert. Der vordere Anlenkpunkt 19 der Strebe 18 befindet sich am Fahrzeugrahmen.

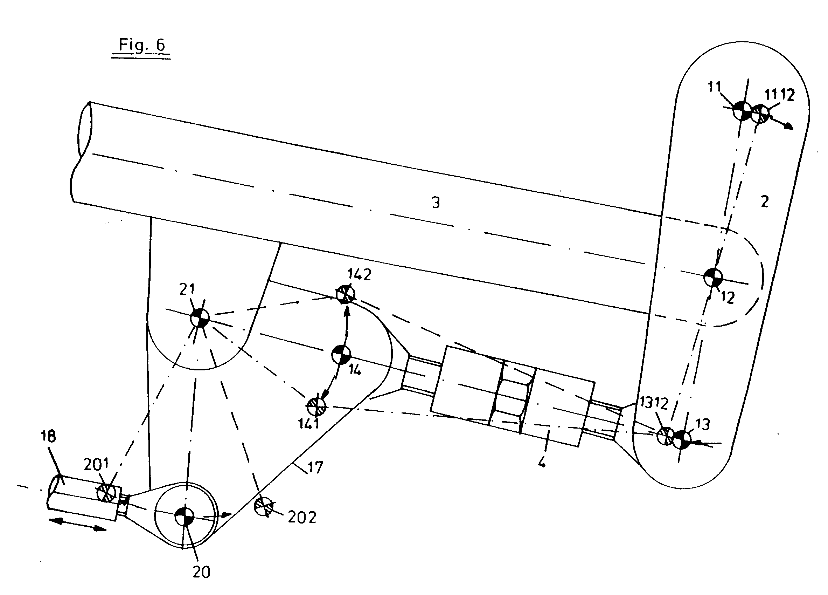

Fig. 6 zeigt die schematische Darstellung des Bewegungsablaufes des am hinteren Ende der Hinterradschwinge 3 befestigten Hebelsystems infolge Ein- und Ausfederung. Die zu Fig. 4 beschriebene Kinematik infolge Ein- und Ausfederung der Schwinge 3 und der Strebe 18 bewirkt an dem erfindungsgemäßen Hebelsystem folgenden Bewegungsablauf: Bei einer Einfederung erfolgt eine Drehung des Kipphebels 17 um seinen Anlenkpunkt an der Hinterradschwinge 21. Die daraus resultierende Rotation des Punktes 20 bewirkt eine gleichwinklige Auslenkung des Punktes 14 um die gemeinsame Achse 21, woraus sich bei einer dementsprechenden Einfederung die Punkte 201 und 141 ergeben. Aus der Auslenkung des Punktes 14 zum Punkt 141 ergibt sich eine Schwenkbewegung der damit gekoppelten Strebe 4, worausfolgend sich eine Verkürzung des Abstandes zwischen den Punkten 13 und 21 ergibt. Diese wiederum hat eine Drehung des Stellhebels 2 um den Punkt 12 zur Folge, woraus sich die Punkte 1112 und 1312 ergeben. Der resultierende Abstand zwischen den Punkten 1112 und 11 stellt die Kompensation der in Fig.3 dargestellten Kettenspannungsänderung (Zahnriemenspannungsänderung) 16 in der gezeigten Position dar. Das Hebelsystem kann so ausgelegt werden, daß diese Kompensation bei jeder Einfederstellung dem Betrag von 16 entspricht (Pseudo-Koaxialität). Es läßt sich jedoch auch durch eine Änderung der Hebellängen 4 und 18 eine Unter- oder Überkompensation zum Erreichen eines vollständigen Anfahrausgleiches erreichen. Gleichzeitig bewirkt eine Längenänderung des Hebels 4 eine Änderung des Abstandes der Punkte 7 und 11 voneinander, die eine Kettenspannungsänderung (Zahnriemenspannungsänderung) darstellt. Bei einer Ausfederung von der Strecklage die die Punkte 202 und142 zur Folge hat, ergibt sich eine Auslenkung des Stellhebels 2 in die gleiche Richtung wie dies bei einer Einfederung der Fall ist. Die Hebelanordnung hat zudem zur Folge, daß sowohl die Einleitung eines Bremsmomentes in den Stellhebel, als auch die Zunahme der Kettenzugkraft, die eine Folge der Fahrzeugbeschleunigung darstellt, ein Rückstellmoment sur Folge haben, das einer Strecklage der Punkte 21, 14 und 13 zugerichtet ist. Wird also besagte Strecklage als normale Fahrlage gewählt, so wirken Bremsmoment und Antriebsmoment den sich daraus ergebenden dynamischen Achslastverteilungen entgegen.

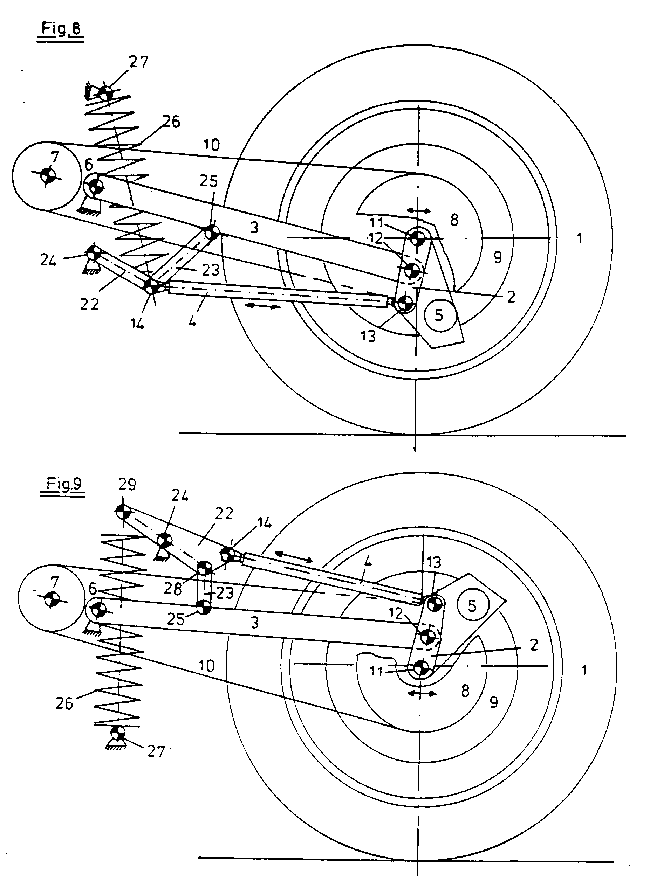

Fig. 7 zeigt eine schematische Seitenansicht einer Variante der in Fig. 4 dargestellten Aufhängung. Bei dieser Variante ist die Verstellhebelei oberhalb der Hinterradschwinge angebracht. In der Wirkungsweise ist die gezeigte Ausführung mit der vorherigen identisch, bis auf den Unterschied, daß ein Bremsmoment nicht einer Rückstellung der Hebelpunkte 13,14 und 21 in die Strecklage zugerichtet ist, sondern dem entgegen. Demzufolge ist eine solche Variante sinnvoll nur dann anwendbar, wenn Platzprobleme am Fahrzeug eine Anordnung nach Fig.4 nicht zulassen.

Fig.8 und 9 zeigen in schematischen Seitenansichten weitere Anordnungsmöglichkeiten der erfindungsgemäßen Hinterradaufhängung mit integriertem Hebelsystem zur Beeinflussung der Hinterradeinfederungskurve. Bei den beiden hier dargestellten Ausführungen ist die Verstellhebelei für die Hinterradachse gekoppelt mit einem, bei sehr vielen heutigen Motorrädern vorhandenem Hebelsystem, das der progressiv wirkenden Betätigung eines Zentralfederbeins dient. Bei der in Fig.8 dargestellten Ausführung wird das am Fahrzeugrahmen am Punkt 27 befestigte Feder-Dämpfer-Element an seinem unteren Ende 14 von einem 2-Hebel-System betätigt, wobei ein Hebel 22 am Fahrzeugrahmen 24 und der andere 23 an der Hinterradschwinge angelenkt ist 25. Ein solches Hebelsystem bewirkt bei einer gleichförmigen Einfederung des Hinterrades eine überproportionale Verkürzung des Federbeins. Bei einer Koppelung der längenverstellbaren Strebe 4 mit einem rechnerisch zu ermittelnden Koppelpunkt 14 läßt sich die Einfederungskurve wie zu Fig.4 beschrieben beeinflussen.

Desgleichen gilt für das in Fig.9 dargestellte System, bei dem sich sowohl die Federhebelei, als auch die erfindungsgemäße Verstellhebelei oberhalb der Hinterradschwinge befinden.

Bei geeigneten Hebelanordnungen, deren mögliche Vielzahl hier im Einzelnen nicht dargestellt ist lassen sich verschiedene Reaktionen der Hinterradfederung auf die zu Fig.6 erläuterten Brems- und Antriebseinflüsse erreichen. Vorteilig gegenüber der in Fig.4 dargestellten Ausführung ist bei diesen Anordnungen die Reduzierung der notwendigen Anzahl der Verstellhebel, nachteilig jedoch die daraus resultierende geringere separate Verstellmöglichkeit, sodaß eines der in Fig.8 und dargestellten Systeme an einem in Großserie hersgestellten Motorrad sinnvoll wären, während das in Fig. 4 beschriebene an einem im Rennsport eingesetzten Motorrad die dort wünschenswerte größtmögliche Variabilität gewährleistet.

## Patentansprüche

1. Einseitige Hinterradaufhängung für ein Einspurfahrzeug, insbesondere ein Motorrad, dessen Hinterrad per Kette oder Zahnriemen angetrieben ist, bestehend aus einer einarmigen Hinterradschwinge, und bei dem das Hinterrad in einem um das hintere Schwingenende frei drehbaren Stellhebel (2) gelagert ist, **dadurch gekennzeichnet** , daß ein Hebelsystem den Stellhebel und die Hinterradschwinge verbindet, daß aus mindestens einer längenverstellbaren Strebe (4) besteht, die mit ihrem hinteren Ende an dem Stellhebel gelagert ist, und daß über eine Längenverstellung dieser Strebe eine Kettenspannungsänderung (Zahnriemenspannungsänderung) annähernd entlang der Schwingenlängsachse erfolgen kann.

2. Einseitige Hinterradaufhängung nach Anspruch 1, **dadurch gekennzeichnet**, daß die längenverstellbare Strebe an ihrem vorderen Ende an der Schwinge gelagert ist.

3. Einseitige Hinterradaufhängung nach Anspruch 1, **dadurch gekennzeichnet**, daß die längenverstellbare Strebe (4) mit einem Kipphebel (17) gekoppelt ist, an dem wiederum eine mit dem Fahrzeugrahmen verbundene zweite längenverstellbare Strebe (18) angelenkt ist, die eine einfederungsabhängige Drehbewegung der Hinterradachse (11) um das hintere Schwingenende (12) bewirkt.

4. Einseitige Hinterradaufhangung nach Anspruch 1, **dadurch gekennzeichnet**, daß die längenverstellbare Strebe (4) an ihrem hinteren Ende mit dem Stellhebel (2) verbunden ist, und an ihrem vorderen Ende an einer der progressiven Betätigung eines Zentralfederbeins dienenden Hebelei angelenkt ist.

## Claims

1. A one-sided rear wheel suspension for a motorcycle or the like, with a rear wheel drive by chain or belt, comprising a one-armed rear swing and that the rear wheel is beared in an adjusting rod (2), that is free rotatable around the swing's rear end, characterized in that a rod system, that is formed of at least one longitudinal adjustable rod (4), that is fixed with it's rear end at the adjusting rod and that the tension adjustment of the chain (belt) nearly along the swing's axis is possible by a longitudinal adjustment of the longitudinal adjustable rod.

2. A one-sided rear wheel suspension as claimed in claim 1, characterized in that the longitudinal adjustable rod's front end is fixed at the swing.

3. A one-sided rear wheel suspension as claimed in claim 1, characterized in that the longitudinal adjustable rod (4) is connected with a turnable rod (17), on which a second longitudinal adjustable rod (18) is fixed, whiches other end is connected to the vehicle's frame and that this rod causes a turning of the rear wheel's axis (11) around the rear swing's rear end (12) relative to rearwheel dive.

4. A one-sided rear wheel suspension as claimed in claim 1, characterized in that the longitudinal adjustable rod's rear end (4) is connected with the adjusting rod (2) and that it's front end is connected with a progressive linkage for a spring-damper unit.

## Revendications

1. Une suspension unilatéral de roue arrière pour les motos et véhicules similaires avec un roue artière entraînée par une châine ou par une courroie dentée, comprenant un seul bras oscillant et ce que la roue arrière est aticulée dans un levier d'ajuster (2), quel est rotatif libre relatif à l'extrémité arrière du bras oscillant, caractérisée en ce que un système des leviers articule le levier d'ajuster et le bras oscillant, quel est formé par au moins un longitudinal réglable levier (4), quel est articulé au levier d'ajuster avec l'extrémité arrière, et ce que l'ajustement de la tension de la chaîne et de la courroie approximatif le long d'axis longitudinal de bras oscillant est possible par un réglage longitudinal de ce levier.

2. Une suspension unilatéral de roue arrière selon revendication 1, caractérisée en ce que l'extrémité avant du longitudinal réglable levier est articulé au bras oscillant.

3. Une suspension unilatéral de roue arrière selon revendication 1, caractérisée en ce que le longitudunal ajustable réglable levier (4) est articulé avec un levier basculer (17), à quel un deuxième longitudinal réglable levier (18) est articulé, quel est artoculé au cadre et ce que ce levier provoque un pivotement de l'axis de la roue arrière (11) relatif à l'extrémité arrière du bras oscillant (12).

4. Une suspension unilatéral de roue arrière selon revendication 1, caractérisée en ce que l'extrémité arrière du longitudunal réglable levier (4) est articulé au levier d'ajuster (2), et ce que l'extrémité avant est articulé à un système des leviers pour l'actionnement progressif de l'élémente d'amortissement.
